# EUROPEAN PATENT SPECIFICATION

(11) **EP 4 175 365 B1**
(45) Date of publication and mention of the grant of the patent: **27.05.2026**
(21) Application number: 21842510.6
(22) Date of filing: 13.07.2021
(51) Int. Cl.: H04W 48/16

(54) **METHOD AND APPARATUS FOR DETERMINING WIRELESS ACCESS POLICIES**
VERFAHREN UND VORRICHTUNG ZUR BESTIMMUNG VON RICHTLINIEN FÜR DRAHTLOSEN ZUGANG
PROCÉDÉ ET APPAREIL PERMETTANT DE DÉTERMINER DES POLITIQUES D'ACCÈS SANS FIL

(30) Priority: 14.07.2020 CN 202010675933; 25.11.2020 CN 202011335655
(43) Date of publication of application: 03.05.2023
(73) Proprietor: Huawei Technologies Co., Ltd., Longgang District, Shenzhen, Guangdong 518129 (CN)
(72) Inventor: DOU, Fenghui, Shenzhen, Guangdong 518129 (CN); CHONG, Weiwei, Shenzhen, Guangdong 518129 (CN); WU, Xiaobo, Shenzhen, Guangdong 518129 (CN); JIN, Hui, Shenzhen, Guangdong 518129 (CN)
(74) Representative: Gill Jennings & Every LLP
(86) International application number: PCT/CN2021/105872
(87) International publication number: WO 2022/012485

(56) References cited:
- EP-A1- 3 917 209
- WO-A1-2016/181040
- WO-A1-2019/113756
- CN-A- 101 616 463
- CN-A- 103 139 876
- CN-A- 107 079 360
- US-A1- 2015 312 826
- US-A1- 2019 222 367
- US-A1- 2019 357 099
- US-A1- 2021 185 574
- HUAWEI ET AL.: "Discussion on Flight Path Information", 3GPP TSG-RAN WG2 MEETING #101BIS R2-1805125, 20 April 2018 (2018-04-20), XP051415864

## Description

### TECHNICAL FIELD

Embodiments of this application relate to the field of wireless communications, and in particular, to the determination of a radio access policy.

### BACKGROUND

In a current network deployment scenario, two radio access technology (radio access technology, RAT) systems coexist: a long time evolution (long time evolution, LTE) system and a new radio (new radio, NR) system. Each RAT system may have a plurality of access frequencies (for example, 2.6 GHz, 3.5 GHz, and 700 MHz), and each RAT system may support different services. For example, some services can be implemented only by using the NR system, and some services can be implemented by using either the NR system or the LTE system. For another example, a voice service runs more stably on an LTE network, and a high-definition video service is more sensitive to a requirement such as a data rate, and needs to run on an NR network.

A network-side device may control a RAT system or a frequency accessed by user equipment (user equipment, UE). Specifically, a unified data management (unified data management, UDM) network element sends a RAT/frequency selection priority (RAT/frequency selection priority, RFSP) in subscription data, or a subscriber profile ID for RAT/frequency priority (subscriber profile ID for RAT/frequency priority, SPID) in the subscription data to a radio access network (radio access network, RAN) through an access and mobility management function (access and mobility management function, AMF) network element. The RFSP or SPID is used to indicate priorities of one or more RAT systems or frequencies. The RAN sends a RAT or frequency with the highest priority currently as a target RAT or a target frequency to the UE, so that the UE subsequently accesses the target RAT or the target frequency after entering an idle mode.

It can be learned from the foregoing that the current RFSP or SPID belongs to the subscription data of the UE, and is statically configured in the UDM network element. In other words, a priority of the RAT system or frequency is fixed. If the UE selects to access a RAT system or frequency based on the RFSP or SPID in the subscription data, the UE always accesses the same target RAT or target frequency. Consequently, access selection for the UE is not flexible.

WO 2019/113756 A1 and US 2021/185574 A1 disclose a cell reselection method and device, and a storage medium, which belong to the field of communication technology. The method includes: determining at least two frequency priority rankings carried in a received system message; selecting a target frequency priority ranking from the at least two frequency priority rankings; and carrying out cell reselection according to the target frequency priority ranking.

US 2015/312826 A1 discloses systems, devices, and methods for load balancing in a wireless communication network based on user equipment (UE) mobility.

US 2019/357099 A1 discloses a method and an apparatus for cell selection or reselection and a method and an apparatus for setting a cell handover parameter.

EP 3917209 A1 discloses a network selection method, a network device, and a terminal device. The network selection method mainly includes: A first network device sends a first message to a terminal device. The first message includes a message that indicates the terminal device to measure a cell of a first-type network, the first-type network is a high-priority network selectable for the terminal device, and a network provided by the first network device does not belong to the first-type network.

US 2019/222367 A1 discloses a method for a user equipment including determining, by the UE, whether to select a supplementary uplink (SUL) component carrier for building or resuming a radio resource control (RRC) connection with a serving cell during at least one of: a cell selection procedure, having a cell selection or reselection procedure; or a UL/SUL component carrier decision procedure, where the determination of whether to select the SUL component carrier is based at least in part on a mobility state of the UE.

### SUMMARY

Embodiments of this application provide a method, an apparatus and a computer-readable storage medium for determining radio access policy, to resolve a problem that access selection for a UE is not flexible when the UE performs access selection based on subscription data.

The invention is set out in the independent claims. Further embodiments are set out in the dependent claims.

### BRIEF DESCRIPTION OF DRAWINGS

FIG. 1 is a schematic diagram of an architecture of a mobile communication system according to an embodiment of this application;
FIG. 2 is a schematic diagram of an architecture in which an NWDAF collects data from another NF according to an embodiment of this application;
FIG. 3 is a schematic diagram of an architecture in which another NF collects data from an NWDAF according to an embodiment of this application;
FIG. 4 is a schematic diagram in which a third network element obtains a preset model configured to determine a movement manner according to an embodiment of this application;
FIG. 5 is an overview flowchart of a method for determining radio access policy according to an embodiment of this application;
FIG. 6 is a specific schematic flowchart 1 of a method for determining radio access policy according to an embodiment of this application;
FIG. 7 is a specific schematic flowchart 2 of a method for determining radio access policy according to an embodiment of this application;
FIG. 8 is a schematic diagram 1 of a structure of a communication apparatus according to an embodiment of this application; and
FIG. 9 is a schematic diagram 2 of a structure of a communication apparatus according to an embodiment of this application.

### DESCRIPTION OF EMBODIMENTS

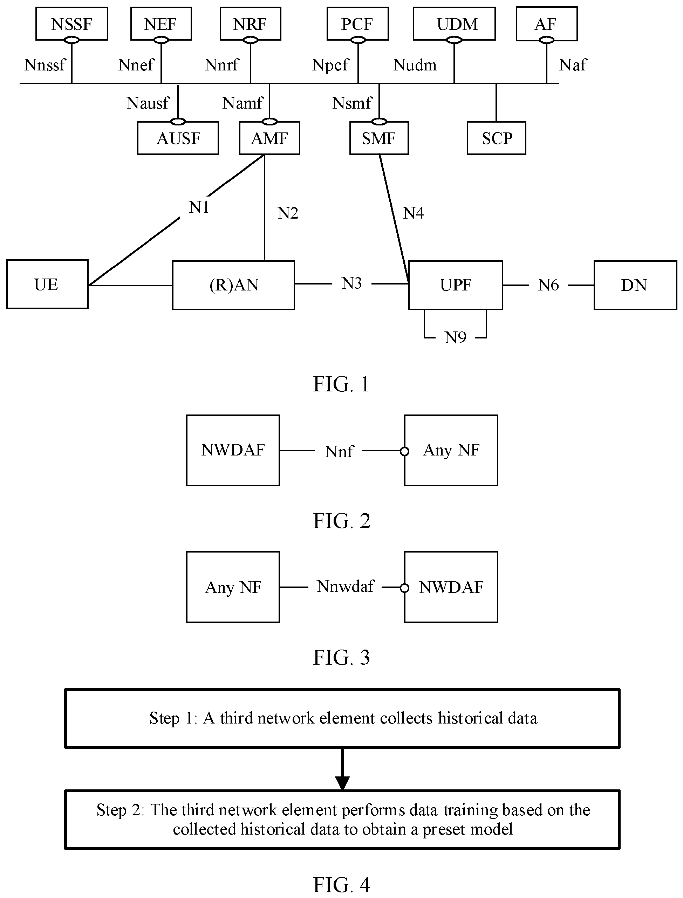

A system architecture to which embodiments of this application are applicable includes but is not limited to a 5G mobile communication system, as shown in FIG. 1.

The following briefly describes network elements in embodiments of this application.

Network data analytics function (network data analytics function, NWDAF): It provides data collection, training, analysis, and inference functions. It can be used to collect related data from a network element, a third-party service server, a terminal device, or a network management system, perform analysis and training based on the related data, and provide a data analysis result for the network element, the third-party service server, the terminal device, or the network management system. The analysis result may assist a network in selecting a quality of service parameter of a service, assist a network in performing traffic routing, assist a network in selecting a background traffic transmission policy, and the like.

Policy control function (policy control function, PCF): It is used to provide various related policies such as an access control policy, a session control policy, and a charging policy for a network device or a service user.

NR: 5G network, a new access network technology and standard.

Evolved universal terrestrial radio access network (evolved universal terrestrial radio access network, EUTRAN): It is a new radio access architecture proposed in 3GPP R8, and features to be high-data-rate, low-latency and packet-optimized. The E-UTRAN includes several base stations (E-NodeBs) and provides E-UTRA user plane (physical layer (physical layer, PHY) or media access control (media access control, MAC) layer) and control plane (radio resource control (radio resource control, RRC) protocols terminated at a UE.

A terminal device includes but is not limited to user equipment (user equipment, UE), a subscriber unit, a subscriber station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, a processing device connected to a wireless modem, a vehicle-mounted device, a wearable device, a terminal device in an Internet of things, a household appliance, a virtual reality device, a terminal device in a 5G network, a terminal device in a future evolved public land mobile network (public land mobile network, PLMN), or the like.

AMF: It provides functions such as mobility management, lawful interception, or access authorization and authentication.

Session management function network element (session management function, SMF): It is used to implement session and bearer management, address allocation, and the like. A user plane function network element is configured to perform functions such as routing and forwarding of user plane data, threshold control, traffic monitoring, and verification.

Unified data management (unified data management, UDM): It provides at least one of the following functions for a terminal device: 3GPP AKA authentication credential processing, user identification processing, access authorization, registration/mobility management, subscription management, and SMS message management.

Mobility management entity (mobility management entity, MME): a network element that provides a mobility management function in a long term evolution (long term evolution, LTE) network.

Application function (application function. AF): It is a server end that provides a type of service for a user, and therefore may also be referred to as an application server or a service server. The AF may be an AF deployed on an operator network, or may be a third-party AF.

In some embodiments, embodiments of this application are applied to a multi-NWDAF deployment architecture. A plurality of NWDAFs are allowed to be deployed in a network. Each NWDAF may serve different regions, and may have an analysis type for which the NWDAF is responsible. For example, some NWDAFs are responsible for network data analysis in a region 1, and some NWDAFs are responsible for network data analysis in a region 2. For another example, some NWDAFs may provide analysis of network element load, a user mobility trajectory, and service experience, and some NWDAFs may provide analysis related to an emergency event and a public security event. The user mobility trajectory may be data of a series of timestamps and user location information. The user location information may be indicated by any one or more of information about a cell (a cell identifier, signal strength, signal quality, and the like) on a mobile network on which a UE camps, Wi-Fi network information (a service set identifier (service set identifier, SSID), signal strength, and the like), global positioning system (global positioning system, GPS) location information, a place that a UE has reached, a route that a UE passes or terminates, or the like.

In some embodiments, embodiments of this application are applied to an NWDAF hierarchical deployment architecture. A network allows hierarchical deployment of NWDAFs in different jurisdictions. For example, a central (central) NWDAF is deployed in an entire national PLMN, and edge NWDAFs are separately deployed in different provinces and cities.

In addition, it may be understood that the NWDAF may be independently deployed as a network element, or may be deployed together with another network element. For example, the NWDAF may be deployed together with network elements such as an SMF or an AMF.

It may be understood that embodiments of this application are not limited to only a 5G network, and are applicable to all communication standard networks in which a data analysis function is deployed. In addition, the data analysis function is not limited to being provided only by the NWDAF, and may be provided by another module or network element having the data analysis function.

To resolve a problem that access selection for a UE is not flexible when the UE performs access selection based on subscription data, embodiments of this application provide a method for determining radio access policy. The method includes: A first network element obtains a movement manner of a terminal device. The first network element determines a radio access policy of the terminal device based on the movement manner of the terminal device. The radio access policy is used to indicate at least one of a RAT selection priority of the terminal device, a frequency selection priority of the terminal device, or a cell selection priority of the terminal device. Therefore, according to the foregoing method, the radio access policy can be flexibly determined based on the movement manner of the terminal device. This can improve flexibility of performing access selection by the terminal device based on the radio access policy. The first network element may be a PCF. The first network element may determine the movement manner of the terminal device based on a preset model, or receive the movement manner of the terminal device reported by a third network element. For details, refer to detailed descriptions in step 500 below. It may be understood that the movement manner of the terminal device in embodiments of this application is a movement manner of a user holding the terminal device. The movement manner may include but is not limited to walking, running, cycling, riding an electric bike, driving, taking a bus, taking a subway, taking a train, and the like. For example, taking a train may indicate taking a high-speed railway, a common train, an express train, or the like. This is not limited in this application.

The following first describes a specific method for obtaining the preset model. The preset model is configured to determine the movement manner of the user holding the terminal device. As shown in FIG. 4, the following merely uses an example in which the third network element obtains the preset model for description. Another network element may alternatively obtain the preset model with reference to the following method. Specifically, that the third network element obtains the preset model includes the following two steps.

Step 1: The third network element collects historical data.

A j^{th} piece of historical data corresponds to a j^{th} terminal device, where j is a positive integer. The j^{th} piece of historical data includes at least one of application data of the j^{th} terminal device, location information of the j^{th} terminal device, an identifier of a serving cell in which the j^{th} terminal device is located, an identifier of a neighboring cell of the serving cell in which the j^{th} terminal device is located, a measured signal strength value of the serving cell in which the j^{th} terminal device is located, a measured signal quality value of the serving cell in which the j^{th} terminal device is located, a signal-to-noise ratio of the serving cell in which the j^{th} terminal device is located, or a measured signal strength value of the neighboring cell of the serving cell in which the j^{th} terminal device is located.

It may be understood that a specific condition for initiating historical data collection by the third network element is not limited in this embodiment of this application.

For example, historical data collection may be triggered by a preset event to start, or may be started within a specified time period. For example, when another network element (for example, an AF) subscribes to related information of at least one UE from the third network element, the third network element starts to collect the historical data. The related information herein may include a UE mobility trajectory, a UE movement manner, and the like.

For example, historical data collection may alternatively be actively started by the third network element.

It may be understood that a historical data source is not limited in this embodiment of this application. For example, the historical data source may include but is not limited to an AF, a 5G network element, operation administration and maintenance (operation administration and maintenance, OAM), a UE, and the like.

A 5G system architecture allows an NWDAF to collect data from another NF. FIG. 2 shows an architecture in which the NWDAF collects data from the another NF.

An Nnf interface is used by the NWDAF to request the another NF to report or cancel subscription to specific data.

The 5G system architecture allows the another NF to obtain network analysis data from the NWDAF. FIG. 3 shows an architecture in which the another NF collects data from the NWDAF.

An Nnwdaf interface is used by the another NF to request the NWDAF to report or cancel subscription to specific network analysis data reporting.

The following merely uses an example in which the third network element collects historical data of one UE for description. Another UE may obtain corresponding historical data or more or fewer types of historical data with reference to the following manner. It should be understood that the data types enumerated below are merely examples, and are not intended to limit embodiments of this application. A person skilled in the art may further collect more or fewer types of historical data for model training.

According to different data sources, the historical data of the UE collected by the third network element may include three parts: first data, second data, and third data, which are separately described below. The first data may come from an AF, the second data may come from a network element, for example, a network function (network function, NF), OAM, or a radio access network (radio access network, RAN), and the third data may come from the UE.

The first data includes application data of the UE. For example, the first data may include application data of a sports application, application data of a transportation application, or application data of a mini program. For example, each piece of application data may include an application identifier (application ID), an application type (application type), a timestamp, and the like. For example, the first data may include cycling data recorded by a bicycle sharing application, code scanning data recorded by a transportation application, and the like.

For example, when the first data may include cycling data recorded by a bicycle sharing application, the first data may include information such as time (for example, 17:30) at which the user unlocks a bicycle, time (for example, 17:45) at which the user locks the bicycle, and a riding route of the user (for example, from an office building X to a subway station Y). In this case, the third network element may determine that the user rides the bicycle from 17:30 to 17:45.

For example, when the first data includes application data of some transportation applications of the UE, the third network element may determine card swiping behavior or code scanning behavior of the user based on application data of some transportation applications of the UE, to determine that the user using the UE takes a vehicle within a time period. For example, if application data recorded by a transportation application includes route information (for example, a bus 300) and getting-on and getting-off station information (for example, getting on at a station A at 7:00 and getting off at a station B at 8:00), the third network element may determine that the user takes a bus between 7:00 and 8:00. For another example, if data recorded by a transportation application includes line information (for example, subway line 10) and station entry and exit information (for example, entering a station C at 7:00 and leaving a station D at 8:00), the third network element may determine that the user takes a subway between 7:00 and 8:00.

For example, when the first data may include exercise data recorded by a sports application, the first data may include information such as exercise start time (for example, 19:30), exercise end time (for example, 20:05), an exercise manner (for example, running) of the user, and a pace. In this case, the third network element may determine that the user runs from 19:30 to 20:05.

For example, when the first data may include data recorded by a map application, the first data may include information such as navigation start time (for example, 19:30), navigation end time (for example, 20:05), an average vehicle speed, and a driving route. In this case, the third network element may determine that the user drives at 19: 30 to 20:05.

The second data includes network data related to the UE. For example, the second data may include UE location information (for example, global positioning system (global positioning system, GPS) location information, BeiDou positioning information, and network positioning information (namely, location information determined based on a serving cell of the UE, a neighboring cell of the serving cell, a cell identifier such as Wi-Fi, a signal strength-related parameter, and the like), an identifier of the serving cell of the UE, a measured signal strength value (for example, reference signal receiving power (reference signal receiving power, RSRP)) of the serving cell, a measured signal quality value (for example, reference signal receiving quality (reference signal receiving quality, RSRQ)) of the serving cell, a signal-to-noise ratio (for example, a signal to interference plus noise ratio (signal to interference plus noise ratio, SINR)) of the serving cell, an identifier of the neighboring cell of the serving cell of the UE, a measured signal strength value of the neighboring cell, a measured signal quality value of the neighboring cell, and the like.

It may be understood that, generally, the second data may not include network topology information, and the network topology information may be obtained separately. For example, the first network element may store a network topology or obtain the network topology from another network element in advance. The network topology information may include access network information or core network information of a mobile network in a city or a region (for example, a mobile network of China Mobile in Beijing). The access network information mainly indicates base stations that cover the city or region and an attribute of each base station. The attribute of each base station includes cells, a capacity of each cell, a geographical location of each cell, coverage of each cell, a coverage attribute (for example, a hotspot, a high-speed railway, or indoor) of each cell, and the like. The core network information mainly indicates core network devices (for example, an AMF, an SMF, or a UPF in a 5G network) that provide services in the city or region, and a service range, a capacity, a feature, and the like of each device.

In an example, when the second data includes each serving cell through which the UE passes, an identifier of each serving cell, and time at which the UE accesses each serving cell, the third network element may determine the UE mobility trajectory and the UE movement manner based on the network topology information, the identifier of each serving cell, and a coverage attribute of the cell (for example, the cell is a cell covering a high-speed railway segment, or the cell is a cell covering a subway segment). For example, the second data includes time at which the UE accesses a cell 1 and a cell 2, an identifier of the cell 1, and an identifier of the cell 2. The cell 1 and the cell 2 are cells covering a high-speed railway. The third network element may roughly determine a moving speed of the UE based on the time at which the UE accesses the cell 1 and the cell 2 and coverage of the cell 1 and the cell 2, to estimate the UE movement manner. For example, the third network element determines that the moving speed of the UE is 300 km/h. In this case, the UE movement manner is taking a high-speed railway.

It should be noted that, because coverage of a serving cell is relatively large in most cases, to improve determining accuracy, when the UE passes through each serving cell, a signal strength-related parameter of the serving cell, an identifier and a signal strength-related parameter of a neighboring cell may be simultaneously obtained, and all the data is added into the second data, to narrow down a range of the UE in the serving cell. This helps determine the UE mobility trajectory, and improve precision of determining the UE movement manner and the UE mobility trajectory. For example, the second data may further include an RSRP of the cell 1, an RSRQ of the cell 1, a SINR of the cell 1, an RSRQ of the cell 2, an RSRP of the cell 2, a SINR of the cell 2, an RSRP of a cell 3, an RSRQ of the cell 3, an RSRP of a cell 4, and an RSRQ of the cell 4. The cell 3 and the cell 4 are neighboring cells of the cell 1. Based on the foregoing data, the range of the UE in the serving cell can be narrowed. This helps determine the UE mobility trajectory, and improve precision of determining the UE movement manner and the UE mobility trajectory.

In another example, the second data may further include location information (for example, GPS location information or BeiDou positioning information) of a plurality of locations through which the UE passes and time at which the UE passes through each location. Further, the third network element may determine the UE mobility trajectory, and roughly determine the moving speed of the UE based on a distance between the plurality of locations and the time at which the UE passes through each location, to determine the UE movement manner. The location information of the location through which the UE passes may be collected periodically, or collection may be triggered by a specific event. For example, when the user starts an application, the application needs to obtain the UE location information.

Table 1 shows data collected by the third network element from the AF, an AN, the OAM, the RAN, and the NF when the third network element is the NWDAF. An analysis result of UE service behavior (UE service behavior) may be directly obtained from another NWDAF, or may be generated by collecting and analyzing data from the AF. For example, the UE service behavior includes a preference and a rule of using applications by the user. For example, a user A usually uses an application A from 9:00 to 10:00 at night, and a user B usually uses an application B from 7:00 to 8:00 at night. The preference and the rule of using the applications by the user are related to movement behavior of the user to an extent, for example, the user usually watches a video when taking a bus. Therefore, the NWDAF may learn an association relationship between the UE service behavior and the UE movement manner. Further, the UE service behavior may be used as auxiliary information to determine the UE movement manner.

**Table 1 First data and second data obtained by the NWDAF**

| Information (Information) |
|---|
| Start time (Start time) and end time (End time), |
| An identifier of a serving cell and an identifier of a neighboring cell of the serving cell, a measured signal strength value of the serving cell, a measured signal quality value of the serving cell, a signal-to-noise ratio of the serving cell (obtained from the OAM/RAN), a measured signal strength value of the neighboring cell of the serving cell, and UE location information (UE location) |
| Network topology information, cell coverage information, and cell coverage attribute information (obtained from the OAM) |
| Location information of the UE in the serving cell (for example, a cell center or cell edge) (obtained from the AN) |
| Application data of a sports application and/or a transportation application used by the UE, and application data of a mini program (obtained from the AF) |
| UE service behavior (the NWDAF) |

In Table 1, the start time and the end time are used to describe corresponding time periods during which the data in Table 1 is obtained. The UE location information may be understood as absolute location information, and the location information of the UE in the serving cell may be understood as relative location information.

The third data includes the movement manner recorded by the UE, a timestamp related to the movement manner, information about a cell (a cell identifier, signal strength, signal quality, and the like) of a mobile network on which the UE camps, Wi-Fi network information (a service set identifier (service set identifier, SSID), signal strength, and the like), and GPS location information, a place that the UE arrives, or a route that the UE passes or terminates (namely, a UE mobility trajectory).

It may be understood that the foregoing preset event is merely an example, and is not intended to limit this embodiment of this application.

For example, the UE may receive a subscription message from the NWDAF. The subscription message is used to subscribe to a travel record (namely, the third data) of the user, and the travel record includes a movement manner used when the user travels, and the like. In addition, the UE reports the travel record to the NWDAF based on a specific time period (for example, every day or each time travel is completed), or may report one or more pieces of content in the travel record to the NWDAF in real time. The UE may determine the UE movement manner based on application data (for example, application data of a sports application, application data of a transportation application, or application data of a mini program).

For example, the UE may determine card swiping behavior of the user based on application data of some transportation applications installed on the UE, to determine that the user using the UE takes a bus. The UE may report, to the NWDAF, that the UE takes a bus in a time period. Alternatively, the UE may report application data of a transportation application to the NWDAF, and the NWDAF determines the UE movement manner.

For example, the UE may further calculate, based on time at which the UE arrives at a place A and time at which the UE arrives at a place B, speeds at which the UE passes through the place A and the place B, to estimate the UE movement manner.

**Table 2 Third data (namely, the travel record) collected by the NWDAF from the UE**

| Information (Information) |
|---|
| Start time (Start time), end time (End time), and timestamp (Timestamp) |
| Movement manner (for example, walking, running, cycling, riding an electric bike, driving, taking a bus, taking a subway, or taking a train) |
| Usage behavior of a sports or transportation application, a mini program, and near field communication (near field communication, NFC) |
| Notifications on a place that the UE arrives and a route that the UE passes or terminates |

In conclusion, the historical data collected by the third network element may include but is not limited to content listed in the following Table 3.

**Table 3 Historical data of the UE collected by the NWDAF**

| Information (Information) | Data source (Source) | Data description (Description) |
|---|---|---|
| UE ID | AF/SMF/AMF | User identification information, which uniquely identifies a user. |
| Correlation ID (Correlation ID) | AF | The correlation ID may be an IP quintuplet or a new temporary identifier allocated by a 5G core network, and is used by the NWADF to associate data from the AF and data from the NF. |
| timestamp | AF/SMF/AMF | Timestamp |
| UE location information (UE Location) | AMF | User location information, which may be information about a network location or another geographic location |
| Application information (Application information) | AF/UE | Information about applications |
| > Application ID X (Application ID X) | AF | Application identification information, which uniquely identifies an application X |
| >Reference weight factor (reference weight factor) | AF | Reference weight factor of the application X |
| >Duration time (duration time) | AF | Duration of the application X |
| UE movement method (UE movement method) | UE | For example, walking, running, cycling, riding an electric bike, driving, taking a bus, taking a subway, or taking a train |
| UE scenario (UE scenario) | UE | Notifications on the place that the UE arrives and |
| | | the route that the UE passes or terminates |

It should be noted that, first, the user identification information in Table 3 may refer to an international mobile subscriber identity (international mobile subscriber identity, IMSI), a generic public subscription identifier (generic public subscription identifier, GPSI), a subscription permanent identifier (subscription permanent identifier, SUPI), a globally unique temporary identifier (globally unique temporary identifier, GUTI), a temporary mobile subscriber identity (temporary mobile subscriber identity, TMSI), or the like.

Second, the UE ID in Table 3 may alternatively generally refer to identification information of any terminal device on a network. Therefore, the third network element may collect historical data of a large quantity of terminal devices on the network, to obtain an identification model for generating a movement analysis result.

Alternatively, the UE ID may be identification information of a to-be-analyzed terminal device, and is used to identify a specific single terminal device. In other words, the first network element collects information in the foregoing table only for a specific user, to analyze a movement manner of the specific user.

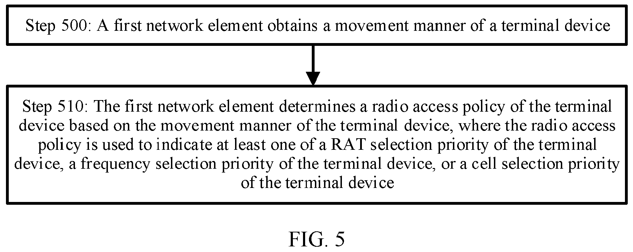

Therefore, a specific implementation of collecting the historical data by the third network element in the step 1 is applied to step 500 in the following embodiment shown in FIG. 5. In other words, the third network element and the first network element may collect data of the terminal device according to the implementation provided in the step 1.

Third, the application information in Table 3 may include an application ID, a reference weight factor, and duration. For example, the application information includes an ID of an application A, a reference weight factor of the application A, duration of the application A, an ID of an application B, a reference weight factor of the application B, and duration of the application B. The reference weight factor may be used to indicate a confidence level of analyzing the UE movement manner by the application. For example, it is assumed that the application A is a music application and the application B is a transportation application. The reference weight factor of the application A is less than that of the application B.

Fourth, as shown in Table 3, the UE may directly obtain the UE movement manner and report the UE movement manner to the third network element. Therefore, repeated learning of the third network element can be avoided.

Step 2: The third network element performs data training based on the collected historical data to obtain the preset model.

It may be understood that the historical data (for example, the data listed in Table 1, Table 2, and Table 3) collected by the third network element is not all necessary data. More collected historical data indicates higher accuracy of the movement analysis result and higher reliability of the obtained preset model.

A specific implementation in which the third network element performs training based on the collected historical data to obtain the preset model for generating the movement analysis result is not limited in this embodiment of this application. For example, the third network element may use a method such as big data-based statistical analysis or machine learning.

In some embodiments, the third network element performs non-supervised learning based on the collected historical data, to obtain the preset model.

In some embodiments, if the third network element can directly obtain the UE movement manner from the UE side, the UE movement manner reported by the UE may be used as a label, and the third network element performs supervised learning based on the label, to obtain the preset model. Obtaining the preset model in this manner can improve accuracy of analyzing the UE movement manner, and further improve reliability of the preset model.

In some embodiments, after the third network element obtains the preset model, the third network element may generate a corresponding UE movement manner analysis result based on the historical data of the UE. In this case, if the third network element can directly obtain the UE movement manner from the UE side, the third network element may adjust the preset model based on the UE movement manner. Alternatively, different weights may be allocated to the UE movement manner analysis result obtained by the third network element and the UE movement manner reported by the UE, to update the UE movement manner analysis result. Obtaining the preset model in this manner can improve accuracy of analyzing the UE movement manner, and further improve reliability of the preset model.

For example, historical data of one UE is used as an example. The NWDAF obtains a UE movement manner based on collected historical data of the UE. A UE movement manner analysis result includes a UE mobility trajectory, a movement manner used by the UE on the mobility trajectory, an occurrence probability of the UE movement manner, duration of the UE movement manner, and the like. Details are shown in Table 4 and Table 5. Further, the third network element may obtain, through training based on a large amount of collected historical data, a preset model configured to generate a movement analysis result.

**Table 4 UE movement manner analysis result**

| Information (Information) |
|---|
| Start time (Start time), end time (End time), and timestamp (Timestamp) |
| UE mobility trajectory and usage behavior of an application (for example, usage behavior of a sports or |
| transportation application, a mini program, and NFC) |
| UE movement manner (for example, walking, running, cycling, riding an electric bike, driving, taking a bus, taking a subway, or taking a train) |

**Table 5 Detailed NWDAF analysis results**

| Information (Information) | Data description (Description) |
|---|---|
| UE ID | User identification information, which uniquely identifies a user. |
| >Timestamp or period (Timestamp/period) | Moment/period |
| >UE location information or UE mobility trajectory (UE Location/UE mobility trajectory) | Location information statistics result /mobility trajectory information of a user, which may be information about a network location or another geographical location. |
| Application ID (Application ID) | Service identification information used by the UE, which uniquely identifies a service. |
| >UE movement method analytics (UE movement method analytics) | UE movement manner analysis data |
| >>UE movement method (UE movement method) | For example, walking, running, cycling, riding an electric bike, driving, taking a bus, taking a subway, or taking a train. |
| >>Occurrence probability (occurrence probability) | Occurrence probability of a UE movement manner |
| >>Duration time (Duration time) | Duration of the UE movement manner |

An embodiment of this application provides a method for determining radio access policy. For example, in this embodiment, a first network element may be a PCF, a second network element may be a RAN, and a third network element may be an NWDAF.

As shown in FIG. 5, the method includes the following steps.

Step 500: The first network element obtains a movement manner of a terminal device.

For example, the first network element may obtain the movement manner of the terminal device by using, but not limited to, the following manners.

Manner 1: The first network element sends first information to the third network element. The first information is used to request the movement manner of the terminal device. The first network element receives second information from the third network element. The second information indicates the movement manner of the terminal device. With reference to the foregoing training process of the preset model, the third network element stores the preset model after training of the preset model is completed. After receiving the first information from the first network element, the third network element may determine, based on data of the terminal device indicated by the first information, the movement manner of the terminal device by using the preset model, and feed the second information back to the first network element.

The first information includes an identifier of the terminal device. The identifier of the terminal device may include a UE ID, a mobile phone number, a name of an owner of the terminal device, identity information of the owner of the terminal device, and the like. In addition, the first information may further include an analytic ID (analytic ID), and the analytic ID is used to indicate to request the movement manner of the terminal device.

Further, the first information may further include a reporting condition, and the reporting condition is used to indicate the third network element to feed back the movement manner of the terminal device based on the reporting condition. For example, the reporting condition may be scheduled reporting, periodic reporting, reporting when the movement manner of the terminal device changes, or the like. In an example, the first information may indicate the third terminal device to send a changed movement manner of the terminal device to the first network element when determining that the movement manner of the terminal device changes. For example, when the movement manner of the terminal device changes from walking to taking a bus, the third network element sends the second information to the first network element. The second information indicates that the movement manner of the terminal device is taking a bus. In an example, the first information further indicates the third network element to report the movement manner of the terminal device in a scheduled or periodic manner. For example, the third network element separately reports the movement manner of the terminal device at 7:00, 8:00, and 9:00 every morning. For another example, the third network element reports the movement manner of the terminal device every one hour.

The first information may further include filtering information. For example, the first information may include time filtering information (for example, a time period) or location filtering information (for example, a specific geographical region, a location region of a mobile network, a routing region, a tracking region, or a region defined in any other form). In an example, the first information further indicates the third network element to report the movement manner of the terminal device in a first preset time period, for example, from 5 p.m. to 7 p.m. In this case, the third network element reports only the movement manner of the terminal device from 5 p.m. to 7 p.m. In an example, the first information further indicates the third network element to report the movement manner of the terminal device in a first preset region, for example, Haidian District, Beijing. In this case, the third network element reports only the movement manner of the terminal device when the terminal device is located in Haidian District, Beijing. In an example, the first information further indicates the third network element to report the movement manner of the terminal device in the first preset region in the first preset time period. In an example, the first information further indicates the first preset time period and the first preset region. The third network element reports the movement manner of the terminal device when the terminal device is located in the preset region in the preset time period.

In addition, the second information may further include at least one scenario characteristic. The at least one scenario characteristic includes at least one of a first time period, a first region, or a mobility trajectory of the terminal device. The movement manner of the terminal device indicated by the second information is a movement manner of the terminal device in the at least one scenario characteristic. The first time period is determined based on duration of the movement manner of the terminal device. In addition, the first time period may alternatively be determined based on a timestamp corresponding to the data of the terminal device, or start time and end time corresponding to the data of the terminal device. The first region is determined based on a mobility trajectory of the movement manner of the terminal device.

Manner 2: The first network element receives the preset model from the third network element. The preset model is configured to determine the movement manner of the terminal device. It may be understood that the first network element may further configure the preset model in the first network element in advance, or the third network element sends the preset model to the first network element, or the third network element sends the preset model to the first network element through another network element. In this case, the first network element may obtain the data of the terminal device. The first network element determines the movement manner of the terminal device based on the data of the terminal device and the preset model.

In addition, the first network element may further determine at least one scenario characteristic based on the data of the terminal device and the preset model. The at least one scenario characteristic includes at least one of a first time period, a first region, or a mobility trajectory of the terminal device. The movement manner of the terminal device indicated by the second information is a movement manner of the terminal device in the at least one scenario characteristic. The first time period is determined based on duration of the movement manner of the terminal device. In addition, the first time period may alternatively be determined based on a timestamp corresponding to the data of the terminal device, or start time and end time corresponding to the data of the terminal device. The first region is determined based on a mobility trajectory of the movement manner of the terminal device.

For Manner 1 and Manner 2, the data of the terminal device may include at least one of application data of the terminal device, location information of the terminal device, an identifier of a serving cell in which the terminal device is located, an identifier of a neighboring cell of the serving cell, a measured signal strength value of the serving cell, a measured signal quality value of the serving cell, a signal-to-noise ratio of the serving cell, or a measured signal strength value of the neighboring cell. It may be understood that, for a specific manner of obtaining the foregoing data, refer to a manner of obtaining the historical data in the preset model training process. Details are not repeated. In addition, it should be noted that the data of the terminal device obtained by the third network element or the first network element may be more than or less than the foregoing listed data. This is not limited in this application.

In addition, there may be more than one movement manner of the terminal device determined by using the preset model. In this embodiment of this application, the movement manner of the terminal device is a movement manner used by the terminal device at a maximum probability, or the movement manner of the terminal device is a movement manner used by the terminal device for longest duration. For example, it is determined by using the preset model that the movement manner of the terminal device may be running or cycling. If a running probability is greater than a cycling probability, running is used as the movement manner of the terminal device. For another example, if the terminal device walks for 10 minutes and takes a subway for 50 minutes between 7:00 and 8:00, taking a subway is used as the movement manner of the terminal device.

Step 510: The first network element determines the radio access policy of the terminal device based on the movement manner of the terminal device. The radio access policy is used to indicate at least one of the RAT selection priority of the terminal device, the frequency selection priority of the terminal device, or the cell selection priority of the terminal device.

In some embodiments, the movement manner of the terminal device is any one of walking, running, cycling, riding an electric bike, or driving. In this case, there is a high probability that the user does not perform heavy-traffic and low-latency services, and a moving speed of the user is relatively low. Therefore, the terminal device may preferentially select a cell whose RAT system is a 4G network or a 4G frequency, a cell with relatively large coverage (namely, a cell with a relatively large coverage layer), or a cell with a small network capacity (namely, a cell with a small capacity layer). In an example, the radio access policy of the terminal device indicates at least one of the following: The RAT selection priority of the terminal device is that a priority of a 4G network is higher than a priority of a 5G network; the frequency selection priority of the terminal device is that a priority of a 4G frequency is higher than a priority of a 5G frequency; the cell selection priority of the terminal device is that a priority of a cell having first coverage is higher than a priority of a cell having second coverage, where the first coverage is greater than the second coverage; or the cell selection priority of the terminal device is that a priority of a cell having a first network capacity is higher than a priority of a cell having a second network capacity, where a first network capacity is less than a second network capacity. In an example, the radio access policy of the terminal device indicates at least one of the following: The RAT selection priority of the terminal device is preferentially selecting a 4G network; the frequency selection priority of the terminal device is preferentially selecting a 4G frequency; the cell selection priority of the terminal device is preferentially selecting a cell with relatively large coverage; or the cell selection priority of the terminal device is preferentially selecting a cell with a relatively small network capacity.

In some embodiments, the movement manner of the terminal device is any one of taking a bus, taking a subway, taking a boat, or taking a train. In this case, the user may perform heavy-traffic and low-latency services. The terminal device may preferentially select a cell whose RAT system is a 5G network or a 5G frequency, a cell with relatively small coverage (namely, a cell with a relatively small coverage layer), or a cell with a relatively large network capacity (namely, a cell with a relatively large capacity layer). In an example, the radio access policy of the terminal device indicates at least one of the following: The RAT selection priority of the terminal device is that a priority of a 5G network is higher than a priority of a 4G network; the frequency selection priority of the terminal device is that a priority of a 5G frequency is higher than a priority of a 4G frequency; the cell selection priority of the terminal device is that a priority of a cell having third coverage is higher than a priority of a cell having fourth coverage, where the third coverage is less than second coverage; or the cell selection priority of the terminal device is that a priority of a cell having a third network capacity is higher than a priority of a cell having a fourth network capacity, where a third network capacity is greater than a fourth network capacity. In an example, the radio access policy of the terminal device indicates at least one of the following: The RAT selection priority of the terminal device is preferentially selecting a 5G network; the frequency selection priority of the terminal device is preferentially selecting a 5G frequency; the cell selection priority of the terminal device is preferentially selecting a cell with relatively small coverage; or the cell selection priority of the terminal device is preferentially selecting a cell with a relatively large network capacity.

It should be noted that the radio access policy of the terminal device in this embodiment of this application indicates a radio access policy corresponding to a movement manner of the terminal device in the at least one scenario characteristic, namely, a radio access policy corresponding to a movement manner of the terminal device on the mobility trajectory of the terminal device in the first region in the first time period.

Therefore, the network device may determine the radio access policy based on the movement manner of the terminal device in the at least one scenario characteristic. For example, the radio access policy of the terminal device includes at least one of a correspondence between the movement manner of the terminal device and the RAT selection priority of the terminal device, a correspondence between the movement manner of the terminal device and the frequency selection priority of the terminal device, a correspondence between the movement manner of the terminal device and the cell selection priority of the terminal device, a correspondence between a second preset time period and the RAT selection priority of the terminal device, a correspondence between a second preset time period and the frequency selection priority of the terminal device, a correspondence between a second preset time period and the cell selection priority of the terminal device, a correspondence between a second preset region and the RAT selection priority of the terminal device, a correspondence between a second preset region and the frequency selection priority of the terminal device, or a correspondence between a second preset region and the cell selection priority of the terminal device.

The second preset time period herein may be the same as or different from the first preset time period indicated by the first information. The second preset region herein may be the same as or different from the first preset region indicated by the first information.

In an example, if the second preset time period is the same as the first preset time period, for example, from 7:00 to 9:00, the first network element sends the first information to the third network element. The first information indicates the third network element to report a movement manner of the terminal device from 7:00 to 9:00. It is assumed that the third network element determines, based on the data of the terminal device, that a movement manner of the terminal device from 7:30 to 8:00 is cycling, and a movement manner of the terminal device from 8:00 to 9:00 is taking a subway. The third network element sends the second information to the first network element. The second information indicates that the movement manner of the terminal device from 7:30 to 8:00 is cycling, and the movement manner of the terminal device from 8:00 to 9:00 is taking a subway. Further, the first network element determines a radio access policy 1 based on a fact that the movement manner of the terminal device from 7:30 to 8:00 is cycling, and determines a radio access policy 2 based on a fact that the movement manner of the terminal device from 8:00 to 9:00 is taking a subway. The first network element sends the radio access policy of the terminal device to the second network element. The radio access policy indicates the radio access policy of the terminal device from 7:00 to 9:00. Details are shown in Table 6.

**Table 6**

| Second preset time period (7 o'clock to 9 o'clock) | Radio access policy |
|---|---|
| 7:30 to 8:00 | Radio access policy 1 |
| 8:00 to 9:00 | Radio access policy 2 |

As shown in Table 6, when the first network element sends the radio access policy of the terminal device to the second network element, the second network element may not need to send the movement manner of the terminal device, but only needs to send a correspondence between a time period and a radio access policy.

It may be understood that when time, regions, and mobility trajectories are different, movement manners of the terminal device may also be different, and corresponding radio access policies of the terminal device may also be different. Therefore, the first network element may dynamically update the radio access policy based on a change of the movement manner of the terminal device, and notify the second network element and/or the terminal device of an updated radio access policy. For example, a radio access information selection policy is represented as that the first network element generates a dynamically changeable RFSP/SPID for the terminal device. The RFSP/SPID is used to indicate a RAT/frequency selection priority. For example, if the movement manner of the terminal device is taking a bus, and the RFSP/SPID indicates that an NR selection priority is highest, it indicates that the terminal device should select 5G for camping in this time. If the movement manner of the terminal device is cycling, and the RFSP/SPID indicates that 4G selection priority is highest, it indicates that the terminal device should select 4G for camping in this time. In addition, if there are a plurality of RFSPs/SPIDs, a PCF identifies a priority of each RFSP/SPID.

In addition, a change of the movement manner of the terminal device may have a rule. For example, when the user goes from home to a company from 8:00 a.m. to 9:00 a.m. from Monday to Friday, a movement manner of the user is taking a subway; and when the user goes home from the company from 6:00 p.m. to 7:00 p.m., the movement manner of the user is cycling. In this case, the first network element generates a corresponding radio access policy set based on a change rule of the movement manner of the terminal device, and notifies the second network element and/or the terminal device of the radio access policy set. Specifically, the first network element determines a first radio access policy and a second radio access policy. The first radio access policy is a radio access policy corresponding to a movement manner of the terminal device in a first scenario characteristic combination. The second radio access policy is a first radio access policy of a movement manner of the terminal device in a second scenario characteristic combination. The first scenario characteristic combination and the second scenario characteristic combination have different scenario characteristics. The movement manner of the terminal device in the first scenario characteristic combination may be the same as or different from the movement manner of the terminal device in the second scenario characteristic combination. The first network element sends the first radio access policy and the second radio access policy to the second network element. For example, in the foregoing example, the first scenario characteristic combination includes that the mobility trajectory of the terminal device is from home to a company, and a time period is 8 o'clock to 9 o'clock. The second scenario characteristic combination includes that the mobility trajectory of the terminal device is from the company to home, and a time period is 18 o'clock to 19 o'clock. It can be learned that the mobility trajectories included in the first scenario characteristic combination and the second scenario characteristic combination are opposite, and the time periods are also different. In addition, movement manners respectively corresponding to the two are also different. In this case, the first network element may alternatively send a plurality of radio access policies of the terminal device at a time, for example, RFSPs/SPIDs respectively corresponding to movement manners of the terminal device in a plurality of scenario characteristic combinations, and may indicate a condition (for example, a time, a region, or RAN load) applicable to each RFSP/SPID.

In some embodiments, after the first network element determines the radio access policy of the terminal device, the first network element sends the radio access policy of the terminal device to the second network element. For example, when the second network element is a RAN, the RAN determines and executes a camping policy of the terminal device based on the radio access policy sent by the first network element. The second network element determines, based on the policy, whether to perform an operation such as cell handover or redirection on the terminal device, so that the terminal device accesses a proper RAT, frequency, or cell. For example, the terminal device is transferred from accessing a 4G network to a 5G network, or is transferred from a 3.5 GHz frequency to a 2.6 GHz frequency.

For example, the camping policy of the terminal device may be specifically: The terminal device continues to camp on an original RAT; the terminal device transfers to access another RAT; the terminal device continues to camp on an original frequency; the terminal device transfers to access another frequency; the terminal device continues to camp on an original coverage layer cell; the terminal device transfers to access another coverage layer cell; the terminal device continues to camp on an original capacity layer cell; or the terminal device transfers to access another capacity layer cell. Specifically, in some embodiments, the camping policy of the terminal device is that the terminal device transfers to access the another RAT, and the second network element implements transferring of the terminal device to access the another RAT. In this case, the second network element hands over or redirects a terminal device in a connected mode to the another target RAT, or broadcast system information to a terminal device in an idle mode, so that the terminal device performs cell reselection based on the system information. The system information includes information about a target RAT. In some embodiments, the camping policy of the terminal device is that the terminal device transfers to access the another frequency, and the second network element implements transferring of the terminal device to access the another frequency. In this case, the second network element hands over or redirects a terminal device in a connected mode to a target frequency, or broadcast system information to the terminal device in an idle mode, so that the terminal device performs cell reselection based on the system information. The system information includes information about the target frequency.

For example, if a RAN determines, based on an RFSP sent by a PCF, that a current RAT or frequency has the highest priority, the RAN determines to continue to reserve the UE in the current RAT or frequency. If a RAN determines, based on an RFSP sent by a PCF, that another RAT or frequency has the highest priority, the RAN triggers a handover procedure to hand over the UE to the another RAT or frequency, or the RAN triggers a redirection procedure to send redirection information to the UE. The redirection information includes information about the another RAT or frequency. After receiving the redirection information, the UE reselects and accesses a target RAT or frequency, to complete the redirection procedure. The UE accesses the target RAT/frequency as indicated by the RAN and initiates services on the target RAT/frequency. Therefore, according to the foregoing method, it can be ensured that the UE accesses a proper RAT/frequency. The RAT/frequency can exactly balance power consumption and service experience of the UE, and help balance network resources. For example, if accessing the UE to a 4G system or a 4G frequency can meet a service requirement, the UE may meet the service requirement and a power saving requirement of the UE at the same time by accessing the 4G system or the 4G frequency. In addition, in an early stage of 5G development, because network resources are limited, if some UEs can meet a service requirement by accessing a 4G system or a 4G frequency, the foregoing example can further achieve effect of balancing network resources.

In some embodiments, after the first network element determines the radio access policy of the terminal device, the first network element sends the radio access policy of the terminal device to the terminal device. For example, the terminal device determines and executes the camping policy of the terminal device based on the radio access policy sent by the first network element. For example, the camping policy of the terminal device may be specifically: The terminal device continues to camp on an original RAT; the terminal device transfers to access another RAT; the terminal device continues to camp on an original frequency; the terminal device transfers to access another frequency; the terminal device continues to camp on an original coverage layer cell; the terminal device transfers to access another coverage layer cell; the terminal device continues to camp on an original capacity layer cell; or the terminal device transfers to access another capacity layer cell. In some embodiments, if the camping policy of the terminal device is that the terminal device transfers to access the another RAT, when the terminal device is in a connected mode, the terminal device may initiate a handover request or a redirection request to a RAN. When the terminal device is in an idle mode, the terminal device performs cell reselection based on the camping policy of the terminal device.

For example, after the terminal device receives the radio access policy of the terminal device sent by the first network element or another network element, if the terminal device is in an idle mode, the terminal device may perform cell reselection based on the policy. For example, the terminal device preferentially selects to camp on a RAT indicated by the policy, the terminal device preferentially selects to camp on a cell on a frequency indicated by the policy, or the terminal device preferentially selects to camp on a cell indicated by the policy.

For example, after the terminal device receives the radio access policy of the terminal device sent by the first network element or another network element, the terminal device is in a connected mode. In this case, when the terminal device reports a measurement report to a RAN, if the radio access policy indicates a preferred RAT system, a measurement result in the measurement report may include only a measurement result (of a cell) of a frequency on a RAT indicated by the policy, or a measurement result in the measurement report includes a measurement result (of a cell) of a frequency on a RAT indicated by the policy and a measurement result (of a cell) of a frequency on another RAT. For example, when the measurement result in the measurement report includes the measurement result (of the cell) of the frequency on the RAT indicated by the policy and the measurement result (of the cell) of the frequency on the another RAT indicated by the policy, the terminal device may select to report a measurement result that is in the measurement result (of the cell) of the frequency on the RAT indicated by the policy and that is better than the measurement result (of the cell) of the frequency on the another RAT. It should be noted that the measurement result in the measurement report may be a measurement result of a frequency on a RAT, or may be a measurement result of a cell on a frequency on a RAT. In the measurement result, there may be one or more frequencies, and there may be one or more cells. Further, the RAN may preferentially redirect or hand over, based on the measurement report reported by the terminal device, the UE to the cell on the RAT indicated by the policy.

Alternatively, if the radio access policy indicates a preferred frequency, a measurement result in the measurement report includes only a measurement result (of a cell) on the frequency indicated by the policy, or a measurement result in the measurement report includes a measurement result (of a cell) on the frequency indicated by the policy and a measurement result (of a cell) on another frequency. For example, when the measurement result in the measurement report includes the measurement result (of the cell) on the frequency indicated by the policy and the measurement result (of the cell) on the another frequency, the terminal device may select to report a measurement result that is in the measurement result (of the cell) on the frequency indicated by the policy and that is better than the measurement result (of the cell) on the another frequency. It should be noted that the measurement result in the measurement report may be a measurement result of a frequency, or may be a measurement result of a cell on a frequency. In the measurement result, there may be one or more frequencies, and there may be one or more cells. Further, the RAN may preferentially redirect or hand over, based on the measurement report reported by the terminal device, the UE to the cell on the frequency indicated by the policy.

Alternatively, if the radio access policy indicates a preferred cell, a measurement result in the measurement report includes only a measurement result of a cell indicated by the policy, or a measurement result in the measurement report includes a measurement result of a cell indicated by the policy and a measurement result of another cell. When the measurement result in the measurement report includes the measurement result of the cell indicated by the policy and the measurement result of the another cell, the terminal device may select to report a measurement result that is in the measurement result of the cell indicated by the policy and that is better than the measurement result of the another cell. Further, a RAN may preferentially redirect or hand over, based on the measurement report reported by the terminal device, the UE to the cell indicated by the policy.

In addition, when the first network element determines the radio access policy of the terminal device based on the movement manner of the terminal device, the first network element determines the radio access policy of the terminal device based on the movement manner of the terminal device and a first parameter. The first parameter includes at least one of a service behavior analysis result of the terminal device, the duration of the movement manner of the terminal device, or the mobility trajectory of the movement manner of the terminal device.

It can be learned from Table 1 that the third network element may further learn the UE service behavior based on data of the UE. The UE service behavior includes a preference and a rule of using an application by the user, that is, the user uses a specific application in a specific time period, a specific region, and a specific movement manner. For example, a user A prefers to watch a video service when taking a subway, a user B prefers to browse a news service when taking a subway, and a user C basically does not use a mobile phone data service when taking a subway. Alternatively, the user A prefers to browse a news service when taking a subway from 7 o'clock to 9 o'clock in the morning, and prefers to watch a video service when taking a subway from 6 o'clock to 8 o'clock in the evening. It can be learned from Table 3 that the third network element may further learn service-related information of the UE based on the data of the UE, for example, identification information of an application, a reference weight factor of the application, and duration of the application. Therefore. the foregoing preset model may be further configured to generate a service behavior analysis result. Therefore, the third network element may further report the service behavior analysis result of the terminal device to the first network element, or the first network element learns the service behavior analysis result of the terminal device based on the data of the terminal device. The service behavior analysis result of the terminal device includes a name and/or a category of an application started by the terminal device, a preference and a rule of using the application by the user, a reference weight factor of the application, duration of the application, and the like. For example, the category of the application may include a video category, a game category, a web page category, a news category, and the like. Alternatively, the category of the application may include a low-latency category, a latency-insensitive category, a high-throughput category, and the like.

The following uses Table 7 as an example for description. The first network element may determine the radio access policy of the terminal device based on the movement manner of the terminal device and the service behavior analysis result of the terminal device. In addition, the service column in Table 7 may be replaced with a service type, an application category, an application name, or the like. Alternatively, at least one column of a service type, an application category, or an application name may be further added to Table 7. A specific form and included content of Table 7 are not limited in this embodiment of this application.

**Table 7**

| No. | User | Time period | movement manner | Service |
|---|---|---|---|---|
| 1 | User A | 7:00 a.m. to 8:00 a.m. | Subway | News page |
| 2 | User A | 5:00 p.m. to 6:00 p.m. | Subway | Video |
| 3 | User B | 7:00 a.m. to 8:00 a.m. | Subway | Memo |
| 4 | User B | 5:00 p.m. to 5:30 p.m. | Bus | Music |
| 5 | User B | 5:30 p.m. to 6:00 p.m. | Bicycle | Music |

The first network element or the third network element may determine a plurality of correspondences shown in Table 7. Each correspondence includes a user identity, a time period, a movement manner of the user (or a user mobile phone) in the time period, and a service behavior analysis result of the user mobile phone in the time period. Therefore, the first network may determine the radio access policy of the terminal device based on the foregoing correspondences. It may be understood that, in this case, the radio access policy of the terminal device determined by the first network element is precisely configured for the user based on user behavior or a user habit. The following examples are not intended to limit this embodiment of this application.

Example 1: A correspondence 1 is that the user A prefers to browse a news web page when taking a subway from 7:00 a.m. to 8:00 a.m., and a correspondence 2 is that the user A watches a video on a mobile phone when taking a subway from 5:00 p.m. to 6:00 p.m. In this case, if the first network element determines a radio access policy of the user A only based on a movement manner, because the movement manner of the user A is the same in the two time periods, a radio access policy corresponding to the mobile phone of the user A from 7:00 a.m. to 8:00 a.m. is the same as a radio access policy corresponding to the mobile phone of the user A from 5:00 p.m. to 6:00 p.m. However, after the first network element obtains the correspondence 1 and the correspondence 2, based on a service behavior analysis result of the mobile phone of the user A in the correspondence 1 and a service behavior analysis result of the mobile phone of the user A in the correspondence 2, the first network element may further determine that service behavior of the user A in a same movement manner, in different time periods is different. Therefore, the radio access policy corresponding to the mobile phone of the user A from 7:00 a.m. to 8:00 a.m. is different from the radio access policy corresponding to the mobile phone of the user A from 5:00 p.m. to 6:00 p.m. It can be learned that, when movement manners of a same user are the same in different time periods, because service behavior is different, radio access policies corresponding to the user in different time periods may be different.

Example 2: A correspondence 4 is that the user B listens to music on a mobile phone when taking a bus from 5:00 p.m. to 5:30 p.m., and a correspondence 5 is that the user B listens to music on the mobile phone when cycling from 5:30 p.m. to 6:00 p.m. In this case, if the first network element determines a radio access policy of the user B only based on a movement manner, because the movement manner of the user B is different in the two time periods, a radio access policy corresponding to the mobile phone of the user B from 5:00 p.m. to 5:30 p.m. may be different from a radio access policy corresponding to the mobile phone of the user B from 5:30 p.m. to 6:00 p.m. However, after the first network element obtains the correspondence 4 and the correspondence 5, based on a service behavior analysis result of the mobile phone of the user B in the correspondence 4 and a service behavior analysis result of the mobile phone of the user B in the correspondence 5, the first network element may further determine that service behavior of the user B in different movement manners is the same in different time periods. Therefore, the radio access policy corresponding to the mobile phone of the user B from 5:30 p.m. to 6:00 p.m. may be the same as the radio access policy corresponding to the mobile phone of the user B from 5:00 p.m. to 5:30 p.m. It can be learned that, when movement manners of a same user are different in different time periods, because service behavior is the same, radio access policies corresponding to the user in different time periods may be the same.

In addition, when movement manners of a same user are different in different time periods, because service behavior is different, radio access policies corresponding to the user in different time periods may be different. When movement manners of a same user are the same in different time periods, because service behavior of the user is the same, the radio access policies of the user in different time periods may be the same.

Example 3: The correspondence 1 is that the user A prefers to browse the news web page when taking a subway from 7:00 a.m. to 8:00 a.m., and a correspondence 3 is that the user B records a memo on the mobile phone when taking a subway from 7:00 a.m. to 8:00 a.m. In this case, if the first network element determines radio access policies of the user A and the user B only based on a movement manner, because the movement manner of the user A is the same as a movement manner of the user B, the radio access policy corresponding to the mobile phone of the user A may be the same as a radio access policy corresponding to the mobile phone of the user B. However, after the first network element obtains the correspondence 1 and the correspondence 3, based on the service behavior analysis result of the mobile phone of the user A in the correspondence 1 and a service behavior analysis result of the mobile phone of the user B in the correspondence 3, the first network element may further determine that service behavior of the user A and the user B in a same movement manner is different, and then different radio access policies may be determined for the user A and the user B. Therefore, when movement manners of different users are the same in a same time period, because service behavior is different, radio access policies of different users may be different.

In addition, when movement manners of different users are different in a same time period, because service behavior is different, radio access policies of different users may be different. When movement manners of different users are different in a same time period, because service behavior is the same, radio access policies of different users may be the same. When movement manners of different users are the same in a same time period, because service behavior is the same, radio access policies of different users may be the same. When movement manners of different users are different in different time periods, because service behavior is different, radio access policies of different users may be different. When movement manners of different users are different in different time periods, because service behavior is the same, radio access policies of different users may be the same. When movement manners of different users are the same in different time periods, because service behavior is the same, radio access policies of different users may be the same. When movement manners of different users are the same in different time periods, because service behavior is different, radio access policies of different users may be different.

In some embodiments, the movement manner of the terminal device is any one of walking, running, cycling, riding an electric bike, or driving. The radio access policy of the terminal device may indicate at least one of the following: preferentially selecting a cell whose RAT system is a 4G network or a 4G frequency, a cell with relatively large coverage (namely, a cell with a relatively large coverage layer), or a cell with a relatively small network capacity (namely, a cell with a relatively small capacity layer). When service behavior of the user includes a heavy-traffic and low-latency service, for example, based on the service behavior analysis result of the terminal device, it is determined that the terminal device starts a video application in the foregoing movement manner, the radio access policy of the terminal device may indicate at least one of the following: preferentially selecting a cell whose RAT system is a 5G network or a 5G frequency, or a cell with relatively small coverage but a relatively large network capacity.

In some embodiments, the movement manner, of the terminal device is any one of taking a bus, taking a subway, taking a boat, or taking a train. The radio access policy of the terminal device may indicate at least one of the following: preferentially selecting a cell whose RAT system is a 5G network or a 5G frequency, or a cell with relatively small coverage but a relatively large network capacity. When service behavior of the user does not include a heavy-traffic and low-latency service, for example, based on the service behavior analysis result of the terminal device, it is determined that the terminal device does not start a heavy-traffic application in the foregoing movement manner, the radio access policy of the terminal device may indicate at least one of the following: preferentially selecting a cell whose RAT system is a 4G network or a 4G frequency, a cell with relatively large coverage (namely, a cell with a relatively large coverage layer), or a cell with a relatively small network capacity (namely, a cell with a relatively small capacity layer).

In addition, the terminal device may further determine a radio access mode of the terminal device in a current movement manner of the terminal device with reference to factors such as the duration of the movement manner of the terminal device and the mobility trajectory of the movement manner of the terminal device. For example, if the user takes a subway from 8 a.m. to 9 a.m., the first network element determines the radio access policy (referred to as the radio access policy 1 below) of the terminal device. If the user takes a subway from 11 a.m. to 12 a.m., the first network element determines the radio access policy (referred to as the radio access policy 2 below) of the terminal device. The radio access policy 1 may be different from the radio access policy 2. For example, the policy 1 indicates that a RAT system is preferentially selected as a 4G network, and the policy 2 indicates that a RAT system is preferentially selected as a 5G network.

In conclusion, according to the foregoing method, the first network element receives the movement manner of the terminal device reported by the third network element, or the first network element obtains the data of the terminal device, and determines the movement manner of the terminal device by using the preset model. After the first network element determines the movement manner of the terminal device, the first network element may determine the radio access policy of the terminal device based on the movement manner of the terminal device.

In addition, based on the foregoing embodiments, in some embodiments, the NWDAF determines the radio access policy of the terminal device based on the movement manner of the terminal device. The NWDAF sends the radio access policy to the PCF. For example, the NWDAF may directly generate the radio access policy based on the data of the terminal device. Alternatively, the NWDAF may first generate the movement manner of the terminal device based on the data of the terminal device, and then determines the radio access policy of the terminal device based on the movement manner of the terminal device. In some embodiments, the PCF sends, to the RAN, the movement manner of the terminal device reported by the NWDAF or the movement manner of the terminal device determined by the PCF, and the RAN determines the radio access policy of the terminal device based on the movement manner of the terminal device.

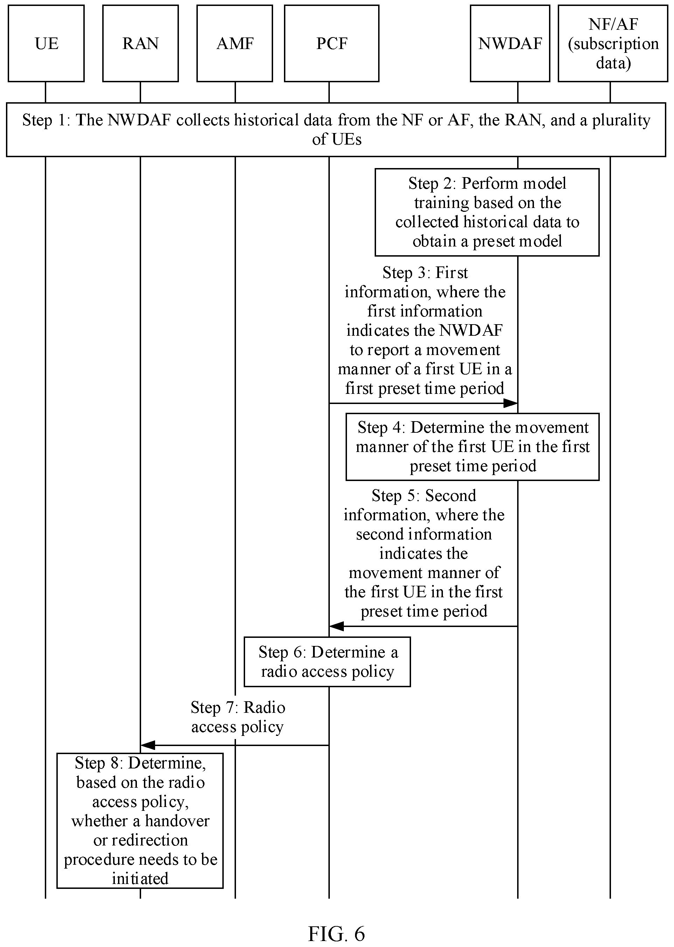

The following describes a specific procedure of this embodiment of this application with reference to FIG. 6. The following PCF may correspond to the first network element in the foregoing embodiment, the RAN may correspond to the second network element in the foregoing embodiment, and the NWDAF may correspond to the third network element in the foregoing embodiment.

Step 1: The NWDAF collects historical data from the NF or AF, the RAN, and a plurality of UEs.

Step 2: The NWDAF performs model training based on the collected historical data, to obtain the preset model. The preset model is configured to determine a movement manner.

Step 3: The NWDAF receives the first information from the PCF.

It may be understood that the first information includes information about at least one UE. The following uses information about only one UE as an example for description. For example, the first information indicates the NWDAF to report a movement manner of a first UE in the first preset time period.

Step 4: The NWDAF determines the movement manner of the first UE in the first preset time period based on an identifier of the first UE and the collected data of the first UE by using the preset model.

Step 5: The NWDAF sends the second information to the PCF. The second information indicates the movement manner of the first UE in the first preset time period.

Step 6: The PCF determines the radio access policy based on the second information. For example, the radio access policy includes a correspondence between an RFSP and the first preset time period.

Step 7: The PCF sends the radio access policy to the RAN.

Step 8: The RAN determines, based on the radio access policy, whether a handover or redirection procedure needs to be initiated.

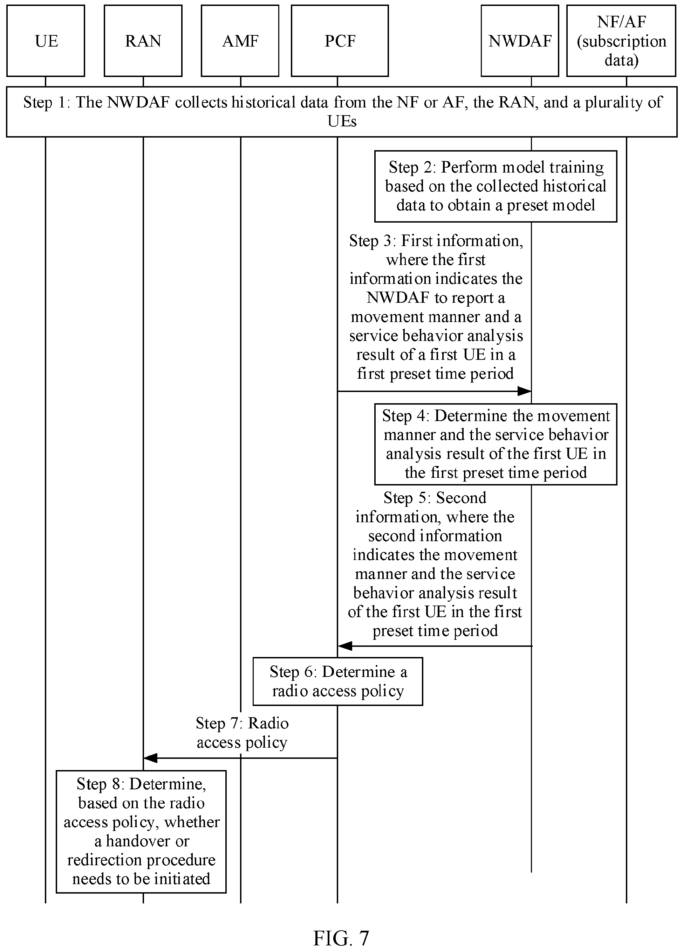

The following describes a specific procedure of this embodiment of this application with reference to FIG. 7. The following PCF may correspond to the first network element in the foregoing embodiment, the RAN may correspond to the second network element in the foregoing embodiment, and the NWDAF may correspond to the third network element in the foregoing embodiment.

Step 1: The NWDAF collects historical data from the NF or AF, the RAN, and a plurality of UEs.

Step 2: The NWDAF performs model training based on the collected historical data, to obtain the preset model. The preset model is configured to determine a movement manner and generate a service behavior analysis result.

Step 3: The NWDAF receives the first information from the PCF. The first information includes information about at least one UE.

It may be understood that the following uses information about only one UE as an example for description. For example, the first information indicates the NWDAF to report a movement manner and a service behavior analysis result of a first UE in the first preset time period.

Step 4: The NWDAF determines the movement manner and the service behavior analysis result of the first UE in the first preset time period based on an identifier of the first UE and the collected data of the first UE by using the preset model.

Step 5: The NWDAF sends the second information to the PCF. The second information indicates the movement manner and the service behavior analysis result of the first UE in the first preset time period.

Step 6: The PCF determines the radio access policy based on the second information. For example, the radio access policy includes a correspondence between an RFSP and the first preset time period.

Step 7: The PCF sends the radio access policy to the RAN.

Step 8: The RAN determines, based on the radio access policy, whether a handover or redirection procedure needs to be initiated.

It may be understood that, to implement the functions in the foregoing embodiments, the network device and the terminal device include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

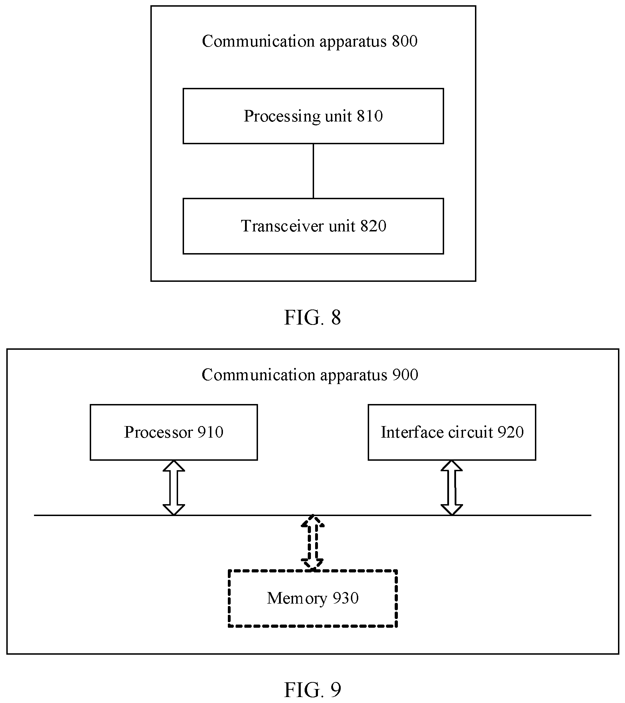

FIG. 8 and FIG. 9 each are schematic diagrams of structures of possible communication apparatuses according to an embodiment of this application. These communication apparatuses may be configured to implement functions of the terminal device or the network device in the foregoing method embodiment. Therefore, advantageous effects of the foregoing method embodiment can also be implemented. In this embodiment of this application, the communication apparatus may be a first network element or a module (such as a chip) of the first network element.

As shown in FIG. 8, a communication apparatus 800 includes a processing unit 810 and a transceiver unit 820. The communication apparatus 800 is configured to implement functions of the first network element in the method embodiment shown in FIG. 5.

When the communication apparatus 800 is configured to implement the functions of the first network element in the method embodiment shown in FIG. 5, the transceiver unit 820 is configured to obtain data of a plurality of terminal devices.

The transceiver unit 820 is further configured to obtain a movement manner of the terminal device. The processing unit 810 is configured to determine a radio access policy of the terminal device based on the movement manner of the terminal device. The radio access policy is used to indicate at least one of a RAT selection priority of the terminal device, a frequency selection priority of the terminal device, or a cell selection priority of the terminal device.

For more detailed descriptions of the processing unit 810 and the transceiver unit 820, directly refer to related descriptions in the method embodiment shown in FIG. 5. Details are not described herein again.

As shown in FIG. 9, a communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to store instructions executed by the processor 910, or store input data required for the processor 910 to run instructions, or store data generated after the processor 910 runs instructions.

When the communication apparatus 900 is configured to implement the method shown in FIG. 5, the processor 910 is configured to perform the functions of the processing unit 810, and the interface circuit 920 is configured to perform the functions of the transceiver unit 820.

When the communication apparatus is a chip used in a first network element, the chip of the first network element implements the functions of the first network element in the foregoing method embodiment. The chip of the first network element receives information from another module (for example, a radio frequency module or an antenna) in the first network element. For example, the information is sent by a second network element or a fourth terminal device to the first network element. Alternatively, the chip of the first network element sends information to another module (for example, a radio frequency module or an antenna) in the first network element. The information is sent by the first network element to a second network element or a fourth terminal device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

The method steps in this embodiment of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions according to embodiments of this application are generated. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired manner or in a wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A method for determining radio access policy, wherein the method comprises:
obtaining (500), by a first network element, a movement manner of a terminal device; and
determining (510), by the first network element, a radio access policy of the terminal device based on the movement manner of the terminal device, wherein the radio access policy is used to indicate at least one of a radio access technology, RAT, selection priority of the terminal device, a frequency selection priority of the terminal device, or a cell selection priority of the terminal device, **characterized in that** the obtaining, by a first network element, a movement manner of a terminal device comprises:
obtaining, by the first network element, data of the terminal device; and
determining, by the first network element, the movement manner of the terminal device based on the data of the terminal device and a preset model, wherein the preset model is obtained based on a plurality of pieces of historical data; a j^{th} piece of historical data corresponds to a j^{th} terminal device, and j is a positive integer; and the j^{th} piece of historical data comprises at least one of application data of the j^{th} terminal device, location information of the j^{th} terminal device, an identifier of a serving cell in which the j^{th} terminal device is located, an identifier of a neighboring cell of the serving cell in which the j^{th} terminal device is located, a measured signal strength value of the serving cell in which the j^{th} terminal device is located, a measured signal quality value of the serving cell in which the j^{th} terminal device is located, a signal-to-noise ratio of the serving cell in which the j^{th} terminal device is located, or a measured signal strength value of the neighboring cell of the serving cell in which the j^{th} terminal device is located.

2. The method according to claim 1, further comprising:
sending, by the first network element, the radio access policy of the terminal device to a second network element.

3. The method according to claim 1 or 2, further comprising:
sending, by the first network element, the radio access policy of the terminal device to the terminal device.

4. The method according to any one of claims 1 to 3, wherein the obtaining, by a first network element, a movement manner of a terminal device comprises:
sending, by the first network element, first information to a third network element, wherein the first information is used to request the movement manner of the terminal device; and
receiving, by the first network element, second information from the third network element, wherein the second information indicates the movement manner of the terminal device.

5. The method according to claim 4, wherein the first information further indicates the third network element to send a changed movement manner of the terminal device to the first network element when determining that the movement manner of the first terminal device changes; or the first information further indicates the third network element to periodically report the movement manner of the terminal device.

6. The method according to any one of claims 1 to 3, further comprising:
receiving, by the first network element, the preset model from a third network element, wherein the preset model is configured to determine the movement manner of the terminal device.

7. The method according to any one of claims 1 to 6, wherein the radio access policy of the terminal device comprises at least one of a correspondence between the movement manner of the terminal device and the RAT selection priority of the terminal device, a correspondence between the movement manner of the terminal device and the frequency selection priority of the terminal device, a correspondence between the movement manner of the terminal device and the cell selection priority of the terminal device, a correspondence between a second preset time period and the RAT selection priority of the terminal device, a correspondence between a second preset time period and the frequency selection priority of the terminal device, a correspondence between a second preset time period and the cell selection priority of the terminal device, a correspondence between a second preset region and the RAT selection priority of the terminal device, a correspondence between a second preset region and the frequency selection priority of the terminal device, or a correspondence between a second preset region and the cell selection priority of the terminal device.

8. The method according to any one of claims 1 to 7, wherein the movement manner of the terminal device is a movement manner used by the terminal device at a maximum probability, or the movement manner of the terminal device is a movement manner used by the terminal device for longest duration.

9. The method according to any one of claims 1 to 8, wherein the movement manner of the terminal device means that a movement manner of a user holding the terminal device is any one of walking, running, cycling, riding an electric bike, or driving; the radio access policy of the terminal device indicates at least one of the following: the RAT selection priority of the terminal device is that a priority of a first network standard is higher than a priority of a second network standard; the frequency selection priority of the terminal device is that a priority of a frequency of the first network standard is higher than a priority of a frequency of the second network standard; the cell selection priority of the terminal device is that a priority of a cell having first coverage is higher than a priority of a cell having second coverage, wherein the first coverage is greater than the second coverage; or the cell selection priority of the terminal device is that a priority of a cell having a first network capacity is higher than a priority of a cell having a second network capacity, wherein the first network capacity is less than the second network capacity; and the first network standard is lower than the second network standard.

10. The method according to any one of claims 1 to 8, wherein the movement manner of the terminal device means that a movement manner of a user holding the terminal device is any one of taking a bus, taking a subway, taking a boat, or taking a train; the radio access policy of the terminal device indicates at least one of the following: the RAT selection priority of the terminal device is that a priority of a second network standard is higher than a priority of a first network standard; the frequency selection priority of the terminal device is that a priority of a frequency of the second network standard is higher than a priority of a frequency of the first network standard; the cell selection priority of the terminal device is that a priority of a cell having third coverage is higher than a priority of a cell having fourth coverage, wherein the third coverage is smaller than the fourth coverage; or the cell selection priority of the terminal device is that a priority of a cell having a third network capacity is higher than a priority of a cell having a fourth network capacity, wherein the third network capacity is greater than the fourth network capacity; and the first network standard is lower than the second network standard.

11. The method according to any one of claims 1 to 10, wherein the determining, by the first network element, a radio access policy of the terminal device based on the movement manner of the terminal device comprises:
determining, by the first network element, the radio access policy of the terminal device based on the movement manner of the terminal device and a first parameter, wherein the first parameter comprises at least one of a service behavior analysis result of the terminal device, the duration of the movement manner of the terminal device, or the mobility trajectory of the movement manner of the terminal device; and the service behavior analysis result of the terminal device comprises a name of an application started by the terminal device and/or a category of the application started by the terminal device.

12. A network element (800, 900), comprising a module configured to perform the method according to any one of claims 1 to 11.

13. A computer-readable storage medium, wherein the storage medium stores a computer program or instructions; and when the computer program or the instructions are executed by a network element , the method according to any one of claims 1 to 11 is implemented.

## Patentansprüche

1. Verfahren zum Bestimmen einer Funkzugangsrichtlinie, wobei das Verfahren umfasst:
Erhalten (500), durch ein erstes Netzwerkelement, einer Bewegungsart eines Endgeräts; und
Bestimmen (510), durch das erste Netzwerkelement, einer Funkzugangsrichtlinie des Endgeräts basierend auf der Bewegungsart des Endgeräts, wobei die Funkzugangsrichtlinie verwendet wird, um mindestens eine einer Auswahlpriorität der Funkzugangstechnologie, RAT, des Endgeräts, einer Frequenzauswahlpriorität des Endgeräts oder einer Zellenauswahlpriorität des Endgeräts anzugeben, **dadurch gekennzeichnet, dass** das Erhalten, durch ein erstes Netzwerkelement, einer Bewegungsart eines Endgeräts umfasst:
Erhalten, durch das erste Netzwerkelement, von Daten des Endgeräts; und
Bestimmen, durch das erste Netzwerkelement, der Bewegungsart des Endgeräts basierend auf den Daten des Endgeräts und einem voreingestellten Modell, wobei das voreingestellte Modell basierend auf einer Vielzahl von historischen Datenelementen erhalten wird; ein j^{-tes} historisches Datenelement einem j^{-ten} Endgerät entspricht und j eine positive ganze Zahl ist; und das j^{-te} historische Datenelement mindestens eines von Anwendungsdaten des j^{-ten} Endgeräts, Standortinformationen des j^{-ten} Endgeräts, einer Kennung einer bedienenden Zelle, in der sich das j^{-te} Endgerät befindet, einer Kennung einer Nachbarzelle der bedienenden Zelle, in der sich das j^{-te} Endgerät befindet, einem gemessenen Signalstärkewert der bedienenden Zelle, in der sich das j^{-te} Endgerät befindet, einem gemessenen Signalqualitätswert der bedienenden Zelle, in der sich das j^{-te} Endgerät befindet, einem Signal-Rausch-Verhältnis der bedienenden Zelle, in der sich das j^{-te} Endgerät befindet, oder einem gemessenen Signalstärkewert der Nachbarzelle der bedienenden Zelle, in der sich das j^{-te} Endgerät befindet, umfasst.

2. Verfahren nach Anspruch 1, ferner umfassend:
Senden, durch das erste Netzwerkelement, der Funkzugangsrichtlinie des Endgeräts an ein zweites Netzwerkelement.

3. Verfahren nach Anspruch 1 oder 2, ferner umfassend:
Senden, durch das erste Netzwerkelement, der Funkzugangsrichtlinie des Endgeräts an das Endgerät.

4. Verfahren nach einem der Ansprüche 1 bis 3, wobei das Erhalten, durch ein erstes Netzwerkelement, einer Bewegungsart eines Endgeräts umfasst:
Senden, durch das erste Netzwerkelement, erster Informationen an ein drittes Netzwerkelement, wobei die ersten Informationen verwendet werden, um die Bewegungsart des Endgeräts anzufordern; und
Empfangen, durch das erste Netzwerkelement, zweiter Informationen von dem dritten Netzwerkelement, wobei die zweiten Informationen die Bewegungsart des Endgeräts angeben.

5. Verfahren nach Anspruch 4, wobei die ersten Informationen ferner das dritte Netzwerkelement anweisen, eine geänderte Bewegungsart des Endgeräts an das erste Netzwerkelement zu senden, wenn bestimmt wird, dass sich die Bewegungsart des ersten Endgeräts ändert; oder die ersten Informationen ferner das dritte Netzwerkelement anweisen, die Bewegungsart des Endgeräts periodisch zu melden.

6. Verfahren nach einem der Ansprüche 1 bis 3, ferner umfassend: Empfangen, durch das erste Netzwerkelement, des voreingestellten Modells von einem dritten Netzwerkelement, wobei das voreingestellte Modell dazu konfiguriert ist, die Bewegungsart des Endgeräts zu bestimmen.

7. Verfahren nach einem der Ansprüche 1 bis 6, wobei die Funkzugangsrichtlinie des Endgeräts mindestens eine einer Korrespondenz zwischen der Bewegungsart des Endgeräts und der RAT-Auswahlpriorität des Endgeräts, einer Korrespondenz zwischen der Bewegungsart des Endgeräts und der Frequenzauswahlpriorität des Endgeräts, einer Korrespondenz zwischen der Bewegungsart des Endgeräts und der Zellenauswahlpriorität des Endgeräts, einer Korrespondenz zwischen einem zweiten voreingestellten Zeitraum und der RAT-Auswahlpriorität des Endgeräts, einer Korrespondenz zwischen einem zweiten voreingestellten Zeitraum und der Frequenzauswahlpriorität des Endgeräts, einer Korrespondenz zwischen einem zweiten voreingestellten Zeitraum und der Zellenauswahlpriorität des Endgeräts, einer Korrespondenz zwischen einer zweiten voreingestellten Region und der RAT-Auswahlpriorität des Endgeräts, einer Korrespondenz zwischen einer zweiten voreingestellten Region und der Frequenzauswahlpriorität des Endgeräts oder einer Korrespondenz zwischen einer zweiten voreingestellten Region und der Zellenauswahlpriorität des Endgeräts umfasst.

8. Verfahren nach einem der Ansprüche 1 bis 7, wobei die Bewegungsart des Endgeräts eine Bewegungsart ist, die durch das Endgerät mit einer maximalen Wahrscheinlichkeit verwendet wird, oder die Bewegungsart des Endgeräts eine Bewegungsart ist, die durch das Endgerät für die längste Dauer verwendet wird.

9. Verfahren nach einem der Ansprüche 1 bis 8, wobei die Bewegungsart des Endgeräts bedeutet, dass eine Bewegungsart eines Benutzers, der das Endgerät hält, eine beliebige aus Gehen, Laufen, Radfahren, Fahren eines Elektrofahrrads oder Fahren ist; die Funkzugangsrichtlinie des Endgeräts mindestens eines der Folgenden angibt: die RAT-Auswahlpriorität des Endgeräts besteht darin, dass eine Priorität eines ersten Netzwerkstandards höher als eine Priorität eines zweiten Netzwerkstandards ist; die Frequenzauswahlpriorität des Endgeräts besteht darin, dass eine Priorität einer Frequenz des ersten Netzwerkstandards höher als eine Priorität einer Frequenz des zweiten Netzwerkstandards ist; die Zellenauswahlpriorität des Endgeräts besteht darin, dass eine Priorität einer Zelle, die eine erste Abdeckung aufweist, höher als eine Priorität einer Zelle ist, die eine zweite Abdeckung aufweist, wobei die erste Abdeckung größer als die zweite Abdeckung ist; oder die Zellenauswahlpriorität des Endgeräts besteht darin, dass eine Priorität einer Zelle, die eine erste Netzwerkkapazität aufweist, höher als eine Priorität einer Zelle ist, die eine zweite Netzwerkkapazität aufweist, wobei die erste Netzwerkkapazität geringer als die zweite Netzwerkkapazität ist; und der erste Netzwerkstandard niedriger als der zweite Netzwerkstandard ist.

10. Verfahren nach einem der Ansprüche 1 bis 8, wobei die Bewegungsart des Endgeräts bedeutet, dass eine Bewegungsart eines Benutzers, der das Endgerät hält, eine beliebige aus Busfahren, U-Bahn-Fahren, Bootfahren oder Zugfahren ist; die Funkzugangsrichtlinie des Endgeräts mindestens eines der Folgenden angibt: die RAT-Auswahlpriorität des Endgeräts besteht darin, dass eine Priorität eines zweiten Netzwerkstandards höher als eine Priorität eines ersten Netzwerkstandards ist; die Frequenzauswahlpriorität des Endgeräts besteht darin, dass eine Priorität einer Frequenz des zweiten Netzwerkstandards höher als eine Priorität einer Frequenz des ersten Netzwerkstandards ist; die Zellenauswahlpriorität des Endgeräts besteht darin, dass eine Priorität einer Zelle, die eine dritte Abdeckung aufweist, höher als eine Priorität einer Zelle ist, die eine vierte Abdeckung aufweist, wobei die dritte Abdeckung kleiner als die vierte Abdeckung ist; oder die Zellenauswahlpriorität des Endgeräts besteht darin, dass eine Priorität einer Zelle, die eine dritte Netzwerkkapazität aufweist, höher als eine Priorität einer Zelle ist, die eine vierte Netzwerkkapazität aufweist, wobei die dritte Netzwerkkapazität größer als die vierte Netzwerkkapazität ist; und der erste Netzwerkstandard niedriger als der zweite Netzwerkstandard ist.

11. Verfahren nach einem der Ansprüche 1 bis 10, wobei das Bestimmen, durch das erste Netzwerkelement, einer Funkzugangsrichtlinie des Endgeräts basierend auf der Bewegungsart des Endgeräts umfasst:
Bestimmen, durch das erste Netzwerkelement, der Funkzugangsrichtlinie des Endgeräts basierend auf der Bewegungsart des Endgeräts und einem ersten Parameter, wobei der erste Parameter mindestens eines von einem Dienstverhaltensanalyseergebnis des Endgeräts, der Dauer der Bewegungsart des Endgeräts oder der Mobilitätstrajektorie der Bewegungsart des Endgeräts umfasst; und das Dienstverhaltensanalyseergebnis des Endgeräts einen Namen einer Anwendung, die durch das Endgerät gestartet wird, und/oder eine Kategorie der Anwendung, die durch das Endgerät gestartet wird, umfasst.

12. Netzwerkelement (800, 900), umfassend ein Modul, das dazu konfiguriert ist, das Verfahren nach einem der Ansprüche 1 bis 11 durchzuführen.

13. Computerlesbares Speichermedium, wobei das Speichermedium ein Computerprogramm oder Befehle speichert; und wenn das Computerprogramm oder die Befehle durch ein Netzwerkelement ausgeführt werden, das Verfahren nach einem der Ansprüche 1 bis 11 implementiert wird.

## Revendications

1. Procédé permettant de déterminer une politique d'accès radio, dans lequel le procédé comprend :
l'obtention (500), par un premier élément de réseau, d'un mode de déplacement d'un dispositif terminal ; et
la détermination (510), par le premier élément de réseau, d'une politique d'accès radio du dispositif terminal sur la base du mode de déplacement, dans lequel la politique d'accès radio est utilisée pour indiquer au moins l'une d'une priorité de sélection de technologie d'accès radio, RAT, du dispositif terminal, d'une priorité de sélection de fréquence du dispositif terminal ou d'une priorité de sélection de cellule du dispositif terminal, **caractérisé en ce que** l'obtention, par un premier élément de réseau, d'un mode de déplacement d'un dispositif terminal comprend :
l'obtention, par le premier élément de réseau, de données du dispositif terminal ; et
la détermination, par le premier élément de réseau, du mode de déplacement du dispositif terminal sur la base des données du dispositif terminal et d'un modèle prédéfini, dans lequel le modèle prédéfini est obtenu sur la base d'une pluralité d'éléments de données historiques ; un j^{ième} élément de données historiques correspond à un j^{ième} dispositif terminal, et j est un entier positif ; et le j^{ième} élément de données historiques comprend au moins l'un des éléments suivants : des données d'application du j^{ième} dispositif terminal, des informations d'emplacement du j^{ième} dispositif terminal, un identifiant d'une cellule de desserte dans laquelle le j^{ième} dispositif terminal est situé, un identifiant d'une cellule voisine de la cellule de desserte dans laquelle le j^{ième} dispositif terminal est situé, une valeur de puissance de signal mesurée de la cellule de desserte dans laquelle le j^{ième} dispositif terminal est situé, une valeur de qualité de signal mesurée de la cellule de desserte dans laquelle le j^{ième} dispositif terminal est situé, un rapport signal/bruit de la cellule de desserte dans laquelle le j^{ième} dispositif terminal est situé, ou une valeur de puissance de signal mesurée de la cellule voisine de la cellule de desserte dans laquelle le j^{ième} dispositif terminal est situé.

2. Procédé selon la revendication 1, comprenant également :
l'envoi, par le premier élément de réseau, de la politique d'accès radio du dispositif terminal à un deuxième élément de réseau.

3. Procédé selon la revendication 1 ou 2, comprenant également : l'envoi, par le premier élément de réseau, de la politique d'accès radio du dispositif terminal au dispositif terminal.

4. Procédé selon l'une quelconque des revendications 1 à 3, dans lequel l'obtention, par un premier élément de réseau, d'un mode de déplacement d'un dispositif terminal comprend :
l'envoi, par le premier élément de réseau, de premières informations à un troisième élément de réseau, dans lequel les premières informations sont utilisées pour demander le mode de déplacement du dispositif terminal ; et
la réception, par le premier élément de réseau, de secondes informations à partir du troisième élément de réseau, dans lequel les secondes informations indiquent le mode de déplacement du dispositif terminal.

5. Procédé selon la revendication 4, dans lequel les premières informations indiquent également au troisième élément de réseau d'envoyer un mode de déplacement modifié du dispositif terminal au premier élément de réseau lorsqu'il détermine que le mode de déplacement du premier dispositif terminal change ; ou les premières informations indiquent également au troisième élément de réseau de signaler périodiquement le mode de déplacement du dispositif terminal.

6. Procédé selon l'une quelconque des revendications 1 à 3, comprenant également :
la réception, par le premier élément de réseau, du modèle prédéfini d'un troisième élément de réseau, dans lequel le modèle prédéfini est configuré pour déterminer le mode de déplacement du dispositif terminal.

7. Procédé selon l'une quelconque des revendications 1 à 6, dans lequel la politique d'accès radio du dispositif terminal comprend au moins l'une d'une correspondance entre le mode de déplacement du dispositif terminal et la priorité de sélection RAT du dispositif terminal, d'une correspondance entre le mode de déplacement du dispositif terminal et la priorité de sélection de fréquence du dispositif terminal, d'une correspondance entre le mode de déplacement du dispositif terminal et la priorité de sélection de cellule du dispositif terminal, d'une correspondance entre une seconde période de temps prédéfinie et la priorité de sélection RAT du dispositif terminal, d'une correspondance entre une seconde période de temps prédéfinie et la priorité de sélection de fréquence du dispositif terminal, d'une correspondance entre une seconde période de temps prédéfinie et la priorité de sélection de cellule du dispositif terminal, d'une correspondance entre une seconde région prédéfinie et la priorité de sélection RAT du dispositif terminal, d'une correspondance entre une seconde région prédéfinie et la priorité de sélection de fréquence du dispositif terminal, ou d'une correspondance entre une seconde région prédéfinie et la priorité de sélection de cellule du dispositif terminal.

8. Procédé selon l'une quelconque des revendications 1 à 7, dans lequel le mode de déplacement du dispositif terminal est un mode de déplacement utilisé par le dispositif terminal avec une probabilité maximale, ou le mode de déplacement du dispositif terminal est un mode de déplacement utilisé par le dispositif terminal pendant la durée la plus longue.

9. Procédé selon l'une quelconque des revendications 1 à 8, dans lequel le mode de déplacement du dispositif terminal désigne tout mode de déplacement d'un utilisateur tenant le dispositif terminal en marchant, en courant, en faisant du vélo, en conduisant un vélo électrique ou en conduisant un véhicule ; la politique d'accès radio du dispositif terminal indique au moins l'un des éléments suivants : la priorité de sélection RAT du dispositif terminal est telle qu'une priorité d'une première norme de réseau est supérieure à une priorité d'une seconde norme de réseau ; la priorité de sélection de fréquence du dispositif terminal est telle qu'une priorité d'une fréquence de la première norme de réseau est supérieure à une priorité d'une fréquence de la seconde norme de réseau ; la priorité de sélection de cellule du dispositif terminal est telle qu'une priorité d'une cellule ayant une première couverture est supérieure à une priorité d'une cellule ayant une deuxième couverture, dans lequel la première couverture est supérieure à la deuxième couverture ; ou la priorité de sélection de cellule du dispositif terminal est telle qu'une priorité d'une cellule ayant une première capacité de réseau est supérieure à une priorité d'une cellule ayant une deuxième capacité de réseau, dans lequel la première capacité de réseau est inférieure à la deuxième capacité de réseau ; et la première norme de réseau est inférieure à la seconde norme de réseau.

10. Procédé selon l'une quelconque des revendications 1 à 8, dans lequel le mode de déplacement du dispositif terminal désigne tout mode de déplacement d'un utilisateur tenant le dispositif terminal en prenant le bus, en prenant le métro, en prenant le bateau ou en prenant le train ; la politique d'accès radio du dispositif terminal indique au moins l'un des éléments suivants : la priorité de sélection RAT du dispositif terminal est telle qu'une priorité d'une seconde norme de réseau est supérieure à une priorité d'une première norme de réseau ; la priorité de sélection de fréquence du dispositif terminal est telle qu'une priorité d'une fréquence de la seconde norme de réseau est supérieure à une priorité d'une fréquence de la première norme de réseau ; la priorité de sélection de cellule du dispositif terminal est telle qu'une priorité d'une cellule ayant une troisième couverture est supérieure à une priorité d'une cellule ayant une quatrième couverture, dans lequel la troisième couverture est inférieure à la quatrième couverture ; ou la priorité de sélection de cellule du dispositif terminal est telle qu'une priorité d'une cellule ayant une troisième capacité de réseau est supérieure à une priorité d'une cellule ayant une quatrième capacité de réseau, dans lequel la troisième capacité de réseau est supérieure à la quatrième capacité de réseau ; et la première norme de réseau est inférieure à la seconde norme de réseau.

11. Procédé selon l'une quelconque des revendications 1 à 10, dans lequel la détermination, par le premier élément de réseau, d'une politique d'accès radio du dispositif terminal sur la base du mode de déplacement du dispositif terminal comprend :
la détermination, par le premier élément de réseau, de la politique d'accès radio du dispositif terminal sur la base du mode de déplacement du dispositif terminal et d'un premier paramètre, dans lequel le premier paramètre comprend au moins l'un d'un résultat d'analyse de comportement de service du dispositif terminal, de la durée du mode de déplacement du dispositif terminal ou de la trajectoire de mobilité du mode de déplacement du dispositif terminal ; et le résultat d'analyse de comportement de service du dispositif terminal comprend un nom d'une application lancée par le dispositif terminal et/ou une catégorie de l'application lancée par le dispositif terminal.

12. Élément de réseau (800, 900), comprenant un module configuré pour réaliser le procédé selon l'une quelconque des revendications 1 à 11.

13. Support de stockage lisible par ordinateur, dans lequel le support de stockage stocke un programme informatique ou des instructions ; et lorsque le programme informatique ou les instructions sont exécutés par un élément de réseau, le procédé selon l'une quelconque des revendications 1 à 11 est mis en œuvre.
